# DEMANDE DE BREVET EUROPEEN

(11) **EP 0 926 430 A1**
(43) Date de publication de la demande: **30.06.1999**
(21) Numéro de dépôt: 98403141.9
(22) Date de dépôt: 14.12.1998
(51) Int. Cl.: F17D 3/00, F17C 13/02, G05B 23/02

(54) **Dispositif et procédé de contrôle du fonctionnement d'une installation industrielle**

(30) Priorité: 24.12.1997 FR 9716489
(71) Demandeur: Alpes Systeme Automation, 38320 Eybens (FR)
(72) Inventeur: Chavand, André, 38320 Eybens (FR)
(74) Mandataire: Vesin, Jacques

(57) **Abrégé**

L'invention concerne un dispositif de contrôle du fonctionnement d'une installation industrielle (3) comportant des organes fonctionnels (5), ledit dispositif (1) comprenant des groupes (G₁, G₂, ...Gₙ) de détecteurs (D_{1,1},... D_{n,j}) de l'état de fonctionnement de l'installation (3) associés chacun à un aspect particulier de surveillance, et une unité d'affichage (11) comprenant des moyens (13) de signalisation des états de fonctionnement relevés par lesdits détecteurs (D_{1,1},... D_{n,j}). Le dispositif comprend, disposés entre lesdits détecteurs (D_{1,1},... D_{n,j}) et l'unité d'affichage (11), des moyens (15) de traitement des états de fonctionnement relevés par lesdits détecteurs (D_{1,1},... D_{n,j}) et de commande de l'affichage sélectif sur ladite unité d'affichage (11) d'informations relatives à des états globaux de fonctionnement de groupes (G₁, G₂, ...Gₙ) prédéterminés de détecteurs (D_{1,1},... D_{n,j}).

## Description

L'invention est relative à un dispositif et à un procédé de contrôle du fonctionnement d'une installation industrielle, notamment d'une installation d'approvisionnement en gaz pour la fabrication de circuits dans la micro-électronique.

La fabrication de circuits micro-électroniques nécessite l'utilisation de divers gaz dits "de travail" comme par exemple Cl₂, NH₃, HCl, HBr, NF₃, WF₆ etc. qui sont considérés pour la plupart comme dangereux pour l'homme du fait de leur toxicité et/ou de leur inflammabilité.

Ces gaz sont acheminés vers des postes de consommation, tels que des postes de fabrication de circuits microélectroniques, par l'intermédiaire d'une installation d'approvisionnement en gaz de ces postes, comprenant, pour chaque gaz, au moins un poste de fourniture de gaz, également connu sous le nom "gas cabinet", et, éventuellement, un poste de distribution du gaz en provenance d'un poste de fourniture pour pouvoir alimenter plusieurs postes de fabrication à la fois.

Du fait de la toxicité des gaz employés, le contrôle du fonctionnement d'une telle installation d'approvisionnement est une priorité absolue. En particulier, en cas d'un dysfonctionnement, il est important de pouvoir identifier rapidement la nature et le lieu du dysfonctionnement afin de pouvoir prendre des contre-mesures qui s'imposent, avant que le dysfonctionnement ait causé un dégât matériel, ou même humain.

C'est pourquoi de telles installations sont équipées d'un dispositif de contrôle de leur fonctionnement comprenant d'une part des groupes de détecteurs de l'état de fonctionnement de l'installation et en particulier de chacun des postes de fourniture et de distribution de gaz, chaque groupe de détecteurs étant associé à un aspect particulier de surveillance tel que la surveillance des fuites de gaz ou la surveillance de l'état de fonctionnement d'un poste spécifique. et d'autre part une unité d'affichage comportant des moyens de signalisation de l'état de fonctionnement pour assurer en particulier la signalisation d'alarmes.

Le but de l'invention est de fournir un dispositif de contrôle permettant de présenter l'état de fonctionnement d'une installation industrielle tout en assurant une identification efficace d'un dysfonctionnement ou d'une alarme détectés.

A cet effet, l'invention a pour objet un dispositif de contrôle du fonctionnement d'une installation industrielle. notamment d'une installation d'approvisionnement en gaz pour la fabrication de circuits dans la micro-électronique, ladite installation comportant des organes fonctionnels, ledit dispositif comprenant des groupes de détecteurs de l'état de fonctionnement de chacun des organes fonctionnels, chaque groupe de détecteurs étant associé à un aspect particulier de surveillance tel que la surveillance des fuites de gaz ou la surveillance de l'état de fonctionnement d'un organe fonctionnel, et une unité d'affichage comprenant des moyens de signalisation des états de fonctionnement relevés par lesdits détecteurs, caractérisé en ce qu'il comprend, disposés entre lesdits détecteurs et l'unité d'affichage, des moyens de traitement des états de fonctionnement relevés par lesdits détecteurs et de commande de l'affichage sélectif sur ladite unité d'affichage d'informations relatives à des états globaux de fonctionnement de groupes prédéterminés de détecteurs.

Le dispositif de contrôle selon l'invention peut de plus comporter une ou plusieurs des caractéristiques suivantes :
- les moyens de traitement et de commande de l'affichage sélectif comprennent une unité de saisie de commandes par un opérateur. et des moyens de mémorisation de plans représentant chacun au moins une partie de l'implantation des organes fonctionnels de l'installation, lesdits plans étant destinés à être affichés, sous la commande de l'opérateur, par ladite unité d'affichage avec au moins une information indiquant sur le plan affiché la position géographique d'au moins un dysfonctionnement relevé par au moins un détecteur d'un groupe prédéterminé,
- lesdits plans représentent divers niveaux de détails. et les moyens de traitement et de commande de l'affichage sélectif comprennent des moyens de sélection, sous la commande de l'opérateur, de plans pour passer d'un niveau de détails à un autre,
- les plans du niveau de détail le plus élevé représentent chacun en une vue synoptique une entité de base, notamment un poste de fourniture ou de distribution de gaz, et les moyens de signalisation comprennent des moyens d'affichage, sur ces plans de niveau de détail le plus élevé, de valeurs de mesure relevées par les détecteurs associés à cette entité de base et représentatives de l'état de fonctionnement de celle-ci,
- lesdits plans comprennent un plan général ayant le niveau de détails le plus faible et représentant l'installation dans son ensemble, ce plan général étant destiné à être affiché en permanence et en parallèle avec des plans d'un niveau supérieur de détails par ladite unité d'affichage , et les moyens de signalisation comprennent des moyens d'affichage, sur ce plan général, d'une information relative à la position de la partie de l'installation représentée en parallèle sur un autre schéma synoptique d'un niveau supérieur de détails,
- les moyens de traitement et de commande de l'affichage sélectif comprennent des moyens de codage des états de fonctionnement pour l'affichage desdites informations sous forme codée,
- le code utilisé par les moyens de codage est un code à trois couleurs dont une est associée à un bon fonctionnement, une à un dysfonctionnement d'importance mineure et une à un dysfonctionnement important.

L'invention a également pour objet un procédé de contrôle du fonctionnement d'une installation industrielle, notamment d'une installation d'approvisionnement en gaz pour la fabrication de circuits dans la micro-électronique, ladite installation comportant des organes fonctionnels, caractérisé en ce qu'il comprend les étapes suivantes:
- on détecte l'état de fonctionnement des organes fonctionnels,
- on forme des groupes d'états de fonctionnement détectés, chaque groupe étant associé à un aspect particulier de surveillance tel que la surveillance des fuites de gaz ou la surveillance de l'état de fonctionnement d'un poste spécifique, et
- on affiche, sur une unité d'affichage, des états globaux de fonctionnement desdits groupes .

Le procédé de contrôle selon l'invention peut de plus comporter une ou plusieurs des caractéristiques suivantes :
- le procédé comprend en outre une étape consistant à afficher, sous la commande d'un l'opérateur, par ladite unité d'affichage, un plan représentant au moins une partie de l'implantation des organes fonctionnels de l'installation avec au moins une information indiquant sur le plan affiché la position géographique d'au moins un dysfonctionnement détecté,
- lesdits plans représentent divers niveaux de détails et le procédé comprend en outre l'étape consistant à sélectionner, sous la commande de l'opérateur, un plan pour passer d'un niveau de détails à un autre,
- lesdits plans du niveau de détails le plus élevé représentent chacun en une vue synoptique une entité de base, notamment un poste de fourniture ou de distribution de gaz, et le procédé comprend l'étape consistant à afficher sur ces plans du niveau de détails le plus élevé, des valeurs de mesure caractéristiques de l'état de fonctionnement détecté,
- lesdits plans comprennent un plan général ayant le niveau de représentation le plus faible et représentant l'installation dans son ensemble, et le procédé comprend l'étape consistant à afficher ce plan général en permanence et en parallèle avec des plans d'un niveau supérieur de détails sur ladite unité d'affichage, et l'on affiche sur ce plan général, une information relative à la position de la partie de l'installation représentée en parallèle sur un autre schéma synoptique d'un niveau supérieur de détails,
- le procédé comprend l'étape consistant à coder les états de fonctionnement et à afficher les états de fonctionnement sous forme codée,
- le code utilisé pour le codage est un code à trois couleurs dont une est associée à un bon fonctionnement, une à un dysfonctionnement d'importance mineure et une à un dysfonctionnement important.

D'autres caractéristiques et avantages de l'invention ressortiront de la description suivante, donnée à titre d'exemple, sans caractère limitatif, en regard des dessins annexés sur lesquels :
- La figure 1 est un schéma synoptique d'un dispositif de contrôle du fonctionnement selon l'invention d'une installation industrielle,
- La figure 2 représente une image affichée par l'unité d'affichage du dispositif de contrôle de la figure 1, illustrant notamment deux plans correspondant pour l'un à un niveau de détails le plus faible et pour l'autre à un niveau directement supérieur de détails, et
- La figure 3 représente une image affichée sur l'unité d'affichage du dispositif de contrôle de la figure 1, illustrant notamment deux plans correspondant pour l'un à un niveau de détails le plus faible et pour l'autre à un niveau de détails le plus élevé.

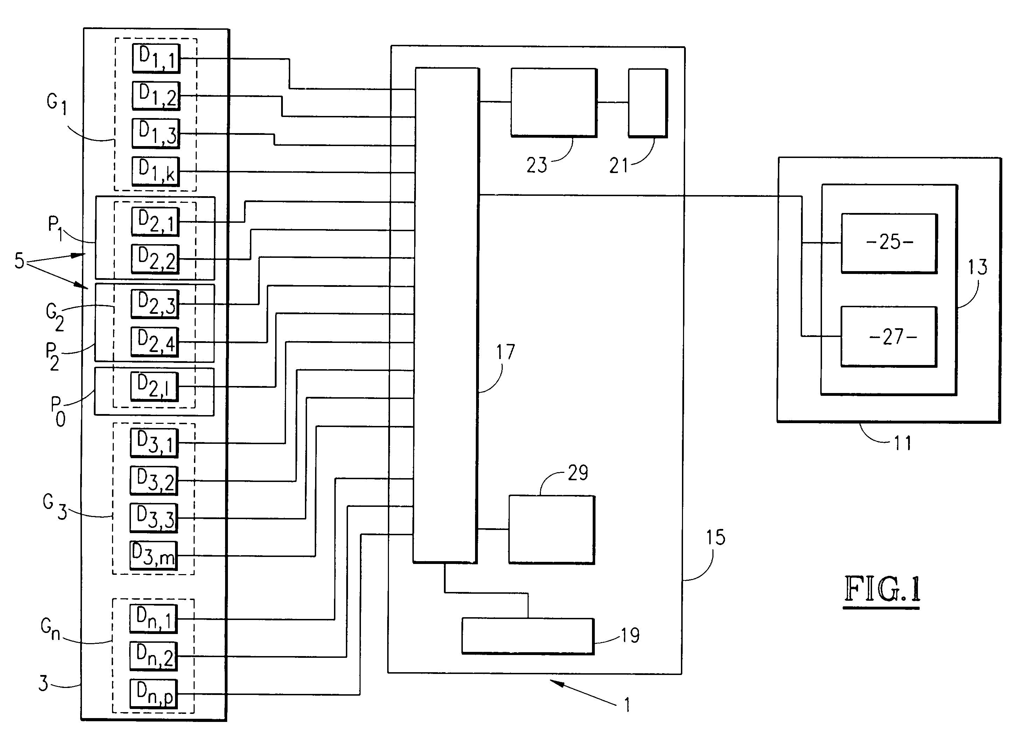

La figure 1 est un schéma synoptique d'un dispositif 1 de contrôle du fonctionnement d'une installation industrielle 3, telle que par exemple une installation d'approvisionnement en gaz pour la fabrication de circuits dans la micro-électronique.

Cette installation 3 comprend des organes fonctionnels 5 comme par exemple des postes P₁, P_{2,}... Pₒ (o étant un nombre naturel quelconque) représentés de façon synoptique. Ces postes P₁, P_{2,}... Pₒ sont par exemple des postes de fourniture de gaz, également connus sous le nom "gas-cabinet", ou des postes de distribution du gaz en sortie d'un des postes de fourniture. A l'aide des postes de distribution du gaz, on peut, à partir d'un seul poste de fourniture de gaz, alimenter plusieurs postes de consommation (non-représentés) à la fois.

Etant donné que ces postes de fourniture et de distribution de gaz sont bien connus de l'homme du métier, on ne les décrira pas en détail.

Pour surveiller l'état de fonctionnement de l'installation 3, le dispositif 1 comprend des groupes G₁, G₂, G₃, ... Gₙ (n étant un nombre naturel quelconque) de détecteurs.

Les détecteurs des différents groupes sont référencés par la lettre capitale D avec en indice un premier nombre correspondant au nombre du groupe et un second nombre correspondant au numéro du détecteur dans ce groupe.

Ainsi le détecteur D_{i,j} est le j-ème détecteur appartenant au groupe numéro i (i,j, ainsi que k,l,m,p qui paraissent sur la figure 1, sont des nombres naturels quelconques).

Chaque groupe G₁, G₂, G₃, ...Gₙ est associé à un aspect particulier de surveillance de l'installation industrielle 3.

A titre d'exemple, le groupe G₁ de détecteurs comprend des détecteurs de fuites de gaz D_{1,1} à D_{1,k}. Ces détecteurs D_{1,1} à D_{1,k} sont installés à des emplacements appropriés de l'installation 3, comme par exemple dans des salles où sont installés les postes P₁, P_{2,}... Pₒ de fourniture et de distribution de gaz

Le groupe G₂ de détecteurs comprend par exemple des capteurs D_{2,1} à D_{2,l} des pressions régnant dans les canalisations de circulation de gaz des postes P₁, P_{2,}... Pₒ de fourniture et de distribution de gaz pour surveiller l'état de fonctionnement de chaque poste spécifique.

Le groupe G₃ de détecteurs comprend par exemple des détecteurs d'incendie D_{3,1} à D_{3,m} installés à des emplacements appropriés de l'installation 3.

De plus, le dispositif 1 comprend une unité d'affichage 11 comportant des moyens 13 de signalisation des états de fonctionnement relevés par chacun D_{i,j} des détecteurs des groupes G₁, G₂, G₃, ... Gₙ.

Entre les détecteurs des groupes G₁, G₂, G₃, ... Gₙ et l'unité d'affichage 11 sont disposés des moyens 15 pour d'une part traiter les états de fonctionnement relevés par chacun D_{i,j} des détecteurs. et pour d'autre part commander un affichage sélectif sur l'unité 11 d'affichage d'informations relatives à des états globaux de fonctionnement.

A cet effet, les moyens 15 comprennent une unité centrale 17 à laquelle sont reliés d'une part tous les détecteurs D_{1,1} ... D_{n,p}, et d'autre part les moyens 13 de signalisation de l'unité d'affichage 11.

Par un état global de fonctionnement, on comprend un état de fonctionnement associé à un groupe Gᵢ prédéterminé de détecteurs D_{i,1} ... D_{i,k} et correspondant soit à un bon état de fonctionnement relevé par l'ensemble des détecteurs D_{i,1} ... D_{i,k} du groupe prédéterminé Gᵢ, soit à un dysfonctionnement ou une alarme relevés par au moins un D_{i,j} des détecteurs du groupe Gᵢ prédéterminé.

Ainsi par exemple, une alarme concernant une fuite de gaz peut facilement être distinguée d'un dysfonctionnement survenu au niveau d'un poste de fourniture de gaz, ce qui permet avantageusement d'accélérer les prises de décisions concernant les contre-mesures à prendre vis-à-vis de l'alarme ou du dysfonctionnement détectés.

Par ailleurs, les moyens 15 de traitement et de commande de l'affichage sélectif sont commandables par un opérateur chargé de la surveillance de toute l'installation 3. au moyen d'une unité 19 de saisie de commandes reliée à l'unité centrale 17.

De plus, les moyens 15 de traitement et de commande de l'affichage sélectif comprennent des moyens 21 de mémorisation de plans représentant chacun au moins une partie de l'implantation des locaux de l'installation 3 ainsi que celle des postes P₁, P_{2,}... Pₒ de fourniture et de distribution disposés dans ces locaux. Ces plans sont destinés à être affichés, sous la commande de l'opérateur saisie par l'intermédiaire de l'unité 19, sur ladite unité d'affichage 11 avec au moins une information indiquant sur le plan affiché la position géographique d'au moins un dysfonctionnement relevé par au moins un détecteur D_{i,j}.

Ces plans sont de divers niveaux de détails. parmi lesquels on cite en particulier un plan général ayant le niveau de détails le plus faible et représentant l'installation dans son ensemble, et des plans d'un niveau de détails le plus élevé représentant chacun de façon détaillée en une vue synoptique une entité de base, comme par exemple un poste spécifique Pᵢ de fourniture ou de distribution de gaz.

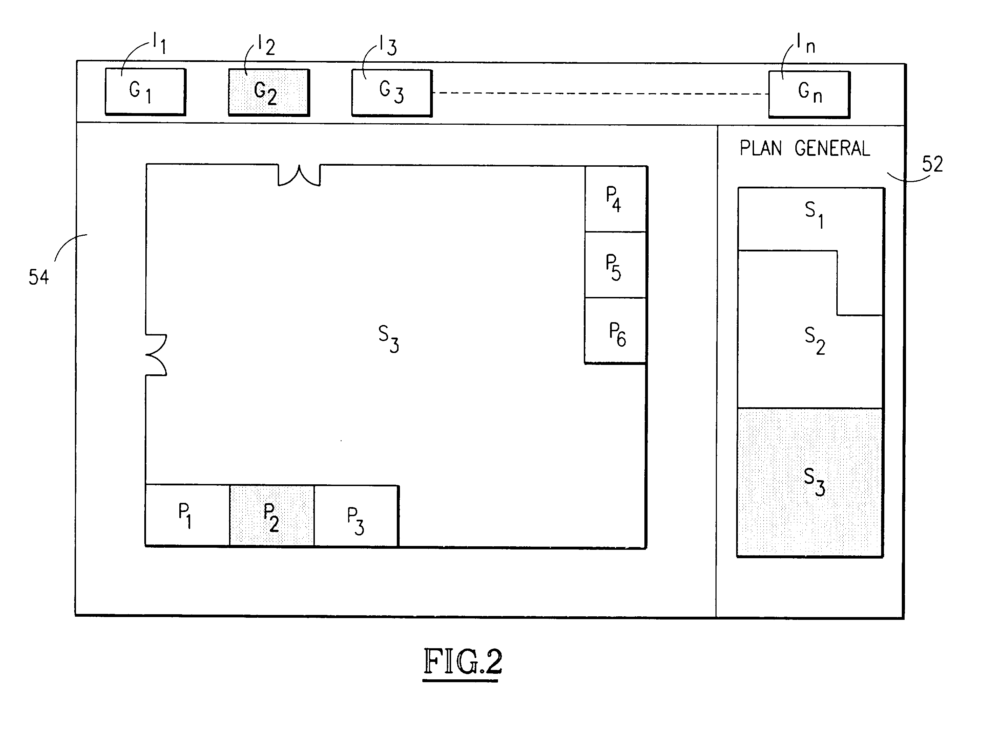

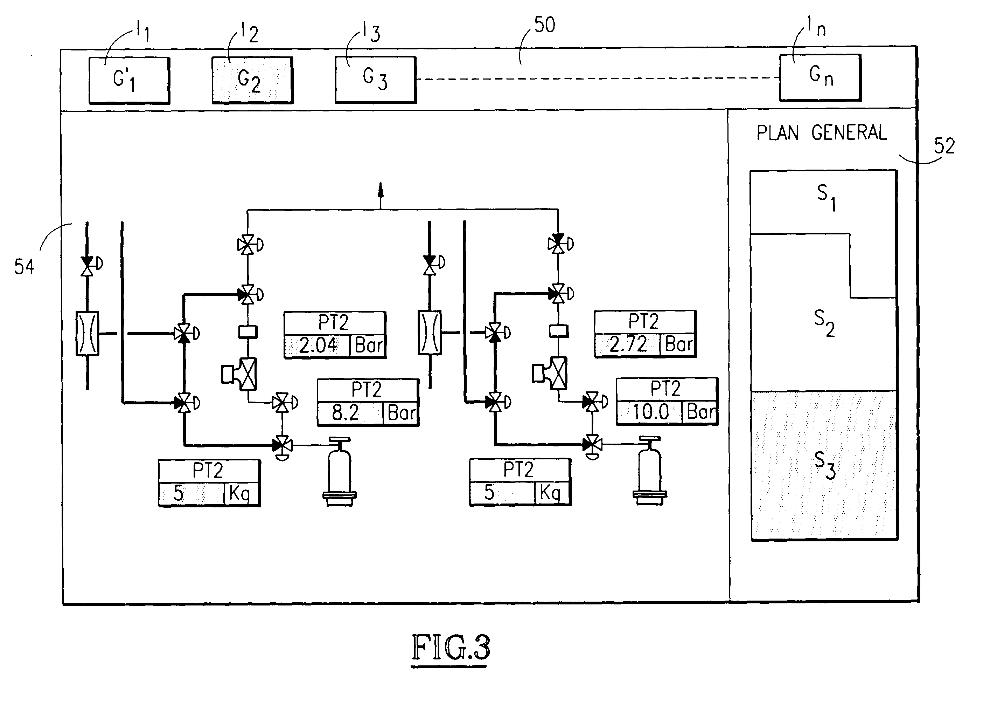

Dans l'exemple décrit et comme cela sera expliqué plus en détail en regard des figures 2 et 3, on a des plans de trois niveaux de détails:
i) le plan général ayant le niveau de détails le plus faible et représentant l'installation dans son ensemble,
ii) des plans intermédiaires, représentant chacun une salle de l'installation et la disposition des postes de fourniture et de distribution de gaz dans ces salles. et
iii) des plans d'un niveau de détails le plus élevé représentant de façon détaillée en une vue synoptique chacun des postes de fourniture ou de distribution de gaz.

Bien entendu, on peut, selon la taille de l'installation, augmenter le nombre de niveaux de détails des plans.

Pour la sélection des plans à afficher, les moyens 15 de traitement et de commande de l'affichage sélectif comprennent en outre, disposés entre les moyens 21 de mémorisation et l'unité centrale 17 des moyens 23 de sélection de plans.

En fonction d'une part d'une commande de l'opérateur saisie par l'intermédiaire de l'unité 19, et d'autre part du plan affiché par l'unité 11. les moyens 23 permettent de sélectionner dans les moyens 21 de mémorisation un plan appartenant soit à un niveau directement supérieur de détails, soit à un niveau directement inférieur de détails par rapport au plan affiché afin de permettre à l'opérateur de passer d'un niveau de détails à un autre.

Par ailleurs, les moyens 13 de signalisation comprennent des moyens 25 d'affichage, sur des plans appartenant au niveau de détails le plus élevé et représentant une vue synoptique d'une entité de base, de valeurs de mesure relevées par les détecteurs D_{i,j} associés à cette entité de base et représentatives de l'état de fonctionnement de celle-ci.

Afin de faciliter le repérage des dysfonctionnements ou alarmes par l'opérateur sur l'image affichée par l'unité 11, le plan général est affiché sur cette unité d'affichage 11 en permanence et en parallèle avec un des plans d'un niveau supérieur de détails, et les moyens de signalisation 13 comprennent de plus des moyens 27 d'affichage sur ce plan général d'une information relative à la position de la partie de l'installation représentée en parallèle sur l'autre plan d'un niveau de supérieur de détails.

De plus, les moyens 15 de traitement et de commande de l'affichage sélectif comprennent des moyens 29 de codage des états de fonctionnement pour l'affichage desdites informations sous forme codée.

Avantageusement, le code utilisé par les moyens 29 de codage est un code à trois couleurs dont une est associée à un bon fonctionnement comme par exemple la couleur verte, une à un dysfonctionnement d'importance mineure comme par exemple la couleur jaune et une à un dysfonctionnement important comme par exemple la couleur rouge.

Avantageusement, le dispositif selon l'invention comprend un ordinateur comprenant un écran d'affichage. un clavier et une souris et dont les mémoires sont chargées d'une part des plans précités et d'autre part d'un programme adapté pour effectuer les opérations de traitement des états de fonctionnement relevés par les détecteurs et de commande de l'affichage sélectif sur ledit écran.

Par la suite on décrira le fonctionnement du dispositif à l'aide des images des figures 2 et 3, affichées par l'unité d'affichage 11.

La figure 2 montre un exemple d'une image affichée sur un écran par l'unité d'affichage 11 lors du fonctionnement du dispositif 1.

Cette image comprend en haut de l'écran un première zone 50 dans laquelle sont affichées des icônes I₁, I₂, I₃ ... Iₙ. Dans ces icônes I₁, I₂, I₃ ... Iₙ sont respectivement inscrites les noms des groupes G₁, G₂, G₃ ... Gₙ de détecteurs auxquelles elles sont associées.

Ces icônes I₁, I₂, I₃ ... Iₙ sont affichées en permanence dans la zone 50 et signalent l'état global de fonctionnement de chaque groupe Gᵢ à un opérateur. Ainsi, même si l'opérateur vérifie par exemple l'état de fonctionnement d'un poste spécifique, les icônes lui signalent en temps réelle l'état de fonctionnement de chaque groupe Gᵢ, et donc de toute l'installation 3, ce qui permet à l'opérateur de réagir vite et efficacement lorsqu'un nouveau dysfonctionnement apparaît.

Dans le cas d'un bon fonctionnement relevé par l'ensemble des détecteurs d'un groupe Gᵢ, l'icône Iᵢ correspondante est de couleur verte Lorsqu'au moins un des détecteurs D_{i,j} du groupe Gᵢ a relevé un dysfonctionnement d'importance mineure ou un dysfonctionnement important, l'icône correspondant Iᵢ change de couleur et devient en fonction de la gravité du dysfonctionnement ou de l'alarme jaune ou rouge.

A droite de l'écran. l'image comprend une zone 52 dans laquelle est affiché le plan général ayant le niveau de détails le plus faible et représentant l'installation dans son ensemble. Dans l'exemple considéré. l'installation 3 comprend trois salles S₁, S₂ et S₃. Ce plan général est également affiché en permanence.

Sur le reste de l'image, la zone 54, est affiché un plan de la salle S₃. Ce plan est plus détaillé et appartient au niveau intermédiaire de détails. Il montre la disposition des différentes postes P₁ à P₆ et les entrées et sorties de la salle S₃.

Sur l'image représentée. on a considéré à titre d'exemple que le poste P₂ de fourniture de gaz est en rupture d'alimentation.

Dans ce cas, un des détecteurs du groupe G₂, qui est associé au poste P₂, transmet une alarme aux moyens 15 de traitement et de commande d'affichage sélectif. Les moyens 29 codent cette alarme et l'unité 17 commande aux moyens 13 de signalisation d'afficher l'icône I₂ en rouge ce qui est représenté sur la figure 2 par une trame grise. Ainsi l'opérateur chargé de la surveillance de l'installation 3 est informé qu'un dysfonctionnement important est survenu au niveau des postes de fourniture et distribution de gaz.

Pour obtenir des informations plus détaillées sur le dysfonctionnement, notamment pour le localiser, l'opérateur commande par l'intermédiaire de l'unité 19, l'affichage d'un plan de la salle où est survenu le dysfonctionnement, c'est-à-dire la salle S₃. Sur ce plan de la salle S₃, la représentation du poste P₂ est également de couleur rouge pour signaler à l'opérateur que le dysfonctionnement est survenu au niveau de ce poste P₂. En même temps et commandé par les moyens 27, la position géographique de la salle S₃ par rapport à l'ensemble de l'installation est indiqué sur le plan général, également par des hachures obliques.

Afin de connaître précisément la nature du dysfonctionnement du poste P₂, l'opérateur commande par l'intermédiaire de l'unité 19 l'affichage d'un plan d'un niveau de détails le plus élevé représentant en une vue synoptique le poste P₂.

Sur l'écran de l'unité 11 est alors affichée l'image représentée sur la figure 3. Cette image diffèrent de celle de la figure 2 d'une part par le plan synoptique du poste P₂ affiché dans la zone 54 de l'écran à la place du plan de la salle S₃ de la figure 2 et, d'autre part par l'affichage, sur ce plan synoptique du poste P₂, de valeurs de mesure relevées par les détecteurs associés à ce poste et représentatives de l'état de fonctionnement de celle-ci, cette affichage de valeurs étant commandée par les moyens 25 d'affichage.

Ainsi. l'opérateur peut reconnaître immédiatement la cause de l'alarme détectée.

On voit donc que le dispositif de contrôle selon l'invention permet avantageusement à un opérateur chargé de la surveillance de l'installation de connaître rapidement l'état de fonctionnement de l'installation et d'identifier efficacement le lieu et la nature du dysfonctionnement survenu.

## Revendications

1. Dispositif de contrôle du fonctionnement d'une installation industrielle (3), notamment d'une installation d'approvisionnement en gaz pour la fabrication de circuits dans la microélectronique, ladite installation comportant des organes fonctionnels (5), ledit dispositif (1) comprenant des groupes (G₁, G₂, ... Gₙ) de détecteurs (D_{1,1},... D_{n,p}) de l'état de fonctionnement de chacun des organes fonctionnels (5), chaque groupe (G₁, G₂, ...Gₙ) de détecteurs étant associé à un aspect particulier de surveillance tel que la surveillance des fuites de gaz ou la surveillance de l'état de fonctionnement d'un organe fonctionnel (5), et une unité d'affichage (11) comprenant des moyens (13) de signalisation des états de fonctionnement relevés par lesdits détecteurs (D_{1,1},... D_{n,p}), caractérisé en ce qu'il comprend, disposés entre lesdits détecteurs (D_{1,1},... D_{n,p}) et l'unité d'affichage (11), des moyens (15) de traitement des états de fonctionnement relevés par lesdits détecteurs (D_{1,1},... D_{n,p}) et de commande de l'affichage sélectif sur ladite unité d'affichage (11) d'informations relatives à des états globaux de fonctionnement de groupes (G₁, G₂, ... Gₙ) prédéterminés de détecteurs (D_{1,1},... D_{n,p}).

2. Dispositif selon la revendication 1, caractérisé en ce que les moyens (15) de traitement et de commande de l'affichage sélectif comprennent une unité (19) de saisie de commandes par un opérateur, et des moyens (21) de mémorisation de plans représentant chacun au moins une partie de l'implantation des organes fonctionnels (5) de l'installation, lesdits plans étant destinés à être affichés, sous la commande de l'opérateur. par ladite unité d'affichage (11) avec au moins une information indiquant sur le plan affiché la position géographique d'au moins un dysfonctionnement relevé par au moins un détecteur (D_{1,1},... D_{n,j}) d'un groupe prédéterminé (D_{1,1},... D_{n,j}).

3. Dispositif selon la revendication 2, caractérisé en ce que lesdits plans représentent divers niveaux de détails, et en ce que les moyens (15) de traitement et de commande de l'affichage sélectif comprennent des moyens de sélection (23), sous la commande de l'opérateur, de plans pour passer d'un niveau de détails à un autre.

4. Dispositif selon la revendication 3, caractérisé en ce que les plans du niveau de détail le plus élevé représentent chacun en une vue synoptique une entité de base, notamment un poste (P₁, P_{2,} ...Pₒ) de fourniture ou de distribution de gaz, et en ce que les moyens de signalisation (13) comprennent des moyens (25) d'affichage, sur ces plans de niveau de détail le plus élevé, de valeurs de mesure relevées par les détecteurs (D_{1,1},... D_{n,j}) associés à cette entité de base et représentatives de l'état de fonctionnement de celle-ci.

5. Dispositif selon la revendication 3, caractérisé en ce que lesdits plans comprennent un plan général ayant le niveau de détails le plus faible et représentant l'installation (3) dans son ensemble, ce plan général étant destiné à être affiché en permanence et en parallèle avec des plans d'un niveau supérieur de détails par ladite unité d'affichage (11), et en ce que les moyens de signalisation (13) comprennent des moyens (27) d'affichage, sur ce plan général, d'une information relative à la position de la partie de l'installation représentée en parallèle sur un autre schéma synoptique d'un niveau supérieur de détails.

6. Dispositif selon l'une quelconque des revendications 1 à 5, caractérisé en ce que les moyens (15) de traitement et de commande de l'affichage sélectif comprennent des moyens (29) de codage des états de fonctionnement pour l'affichage desdites informations sous forme codée.

7. Dispositif selon la revendication 6, caractérisé en ce que le code utilisé par les moyens (29) de codage est un code à trois couleurs dont une est associée à un bon fonctionnement, une à un dysfonctionnement d'importance mineure et une à un dysfonctionnement important.

8. Procédé de contrôle du fonctionnement d'une installation industrielle (3), notamment d'une installation d'approvisionnement en gaz pour la fabrication de circuits dans la micro-électronique, ladite installation comportant des organes fonctionnels (5), caractérisé en ce qu'il comprend les étapes suivantes:
- on détecte l'état de fonctionnement des organes fonctionnels (5),
- on forme des groupes d'états de fonctionnement détectés, chaque groupe étant associé à un aspect particulier de surveillance tel que la surveillance des fuites de gaz ou la surveillance de l'état de fonctionnement d'un poste spécifique, et
- on affiche, sur une unité d'affichage (11), des états globaux de fonctionnement desdits groupes .

9. Procédé selon la revendication 8, caractérisé en ce qu'il comprend en outre une étape consistant à afficher, sous la commande d'un l'opérateur, par ladite unité d'affichage (11), un plan représentant au moins une partie de l'implantation des organes fonctionnels de l'installation avec au moins une information indiquant sur le plan affiché la position géographique d'au moins un dysfonctionnement détecté.

10. Procédé selon la revendication 9, caractérisé en que lesdits plans représentent divers niveaux de détails et en ce qu'il comprend en outre l'étape consistant à sélectionner, sous la commande de l'opérateur, un plan pour passer d'un niveau de détails à un autre.

11. Procédé selon la revendication 10, caractérisé en ce que lesdits plans du niveau de détails le plus élevé représentent chacun en une vue synoptique une entité de base, notamment un poste (P₁,P_{2,} ... Pₒ) de fourniture ou de distribution de gaz, et en ce qu'il comprend l'étape consistant à afficher sur ces plans du niveau de détails le plus élevé, des valeurs de mesure caractéristiques de l'état de fonctionnement détecté.

12. Procédé selon la revendication 10, caractérisé en ce que lesdits plans comprennent un plan général ayant le niveau de représentation le plus faible et représentant l'installation (3) dans son ensemble, et en ce qu'il comprend l'étape consistant à afficher ce plan général en permanence et en parallèle avec des plans d'un niveau supérieur de détails sur ladite unité d'affichage (11), et en ce que l'on affiche sur ce plan général, une information relative à la position de la partie de l'installation représentée en parallèle sur un autre schéma synoptique d'un niveau supérieur de détails.

13. Procédé selon l'une quelconque des revendications 8 à 12, caractérisé en ce qu'il comprend l'étape consistant à coder les états de fonctionnement et à afficher les états de fonctionnement sous forme codée.

14. Procédé selon la revendication 13, caractérisé en ce que le code utilisé pour le codage est un code à trois couleurs dont une est associée à un bon fonctionnement, une à un dysfonctionnement d'importance mineure et une à un dysfonctionnement important.
